Europäisches Patentamt

European Patent Office

Office européen des brevets

(11) Publication number: **0 177 006 B1**

# EUROPEAN PATENT SPECIFICATION

(45) Date of publication of patent specification: **27.12.91**  (51) Int. Cl.⁵: **F24F 6/14**

(21) Application number: **85112368.7**

(22) Date of filing: **30.09.85**

(54) **A system for air humidifying.**

(30) Priority: **01.10.84 FI 843846**

(43) Date of publication of application:
**09.04.86 Bulletin 86/15**

(45) Publication of the grant of the patent:
**27.12.91 Bulletin 91/52**

(84) Designated Contracting States:
**BE DE FR GB NL SE**

(56) References cited:
**DE-A- 2 330 976**
**DE-A- 2 939 951**
**DE-C- 464 523**
**US-A- 2 213 167**

(73) Proprietor: **ABB FLÄKT AB**
**Sickla Allé 13**
**S-Nacka(SE)**

(72) Inventor: **Marttila, Erkki**
**Soliniuksenkuja**
**SF-21200 Raisio(FI)**
Inventor: **Peltola, Heikki**
**Karhutie 9**
**SF-15880 Soramäki(FI)**
Inventor: **Rolin, Ingmar**
**Laaksonpohjantie 5 A**
**SF-02730 Espoo(FI)**

(74) Representative: **Lehn, Werner, Dipl.-Ing. et al**
**Hoffmann, Eitle & Partner Patentanwälte Arabellastrasse 4**
**W-8000 München 81(DE)**

## Description

The present invention relates to a system for air humidifying by means of humidifier nozzles, especially in industrial halls and the like.

Humidifying nozzles can be operated by means of pressurized air or water. A serious disadvantage of such nozzles is that they easily attract dirt from the surrounding air, which, in turn, results in so called dropping. Such water drops may be greatly disturbing in e. g. paper production processes, for which reason the nozzles cannot be positioned above the process. Besides, solid and dissolved substances contained in the water get into the air, and a precise control is usually difficult.

There are also indirect humidifying systems in use, wherein water is evaporated from e.g. a cell. Such cells gather dust and form a culture medium for bacteria, algae and mould. Plenty of maintaining is required to obtain satisfactory operation. The humidifying effectiveness is dependent on the amount of air, and the humidity ratio is limited.

A prior art that is of interest is that disclosed in DE-C-454 523. In this prior art there is disclosed a humidifier nozzle integrated as part of a blower nozzle so that air exiting from the blower nozzle carries away water droplets provided by the humidifier. The humidifier is mounted above the air jet where it issues from the blower and the blower nozzle has a plate below the air jet and pivotable about a horizontal axis, the angle of inclination of the plate varying the direction of the air jet with respect to the humidifier.

It is an object of the present invention to provide an improved air humidifying system of the type mentioned in the opening paragraph above which eliminates or reduces at least some of the previous disadvantages; and which provides a more effective distribution than that disclosed in the aforesaid prior art.

The system according to the invention uses a plurality of air nozzles each of which produces an air jet directed into the range of action of at least one humidifier nozzle in order to increase the amount of air for binding or capturing humidity and in order to convey the humidity in a desired direction, said plurality of air nozzles being mounted in a sequence such that each air nozzle for which there is a preceding air nozzle in the sequence is positioned within the jet range of said preceding air nozzle; at least one of said air nozzles being an air impulse nozzle.

The air nozzles are capable of conveying slowly incoming conditioning air and surrounding air over a long distance to the desired object, and of carrying humidity therewith. In this way, the range of action of the humidifier nozzles can be notably lengthened in the direction of movement of the air, and, at the same time, it is possible to narrow the diffusion of the water spray both in height and in width.

It is also possible to use nozzles having a large capacity and they can be concentrated within a considerably smaller area than previously and, what is important, in such a manner that there are not any longer any humidifier nozzles positioned immediately above sensitive process stages or machines. As the water spray is better held together, it is also possible to reduce the free height required above the process machines for giving the spray drops enough time to evaporate so that they do not fall on sensitive surfaces. In addition, the humidifying process is much easier to control, because the humidifying is not dependent on the amount of incoming air.

In the system according to the invention, the air is cooled by means of an evaporative cooling, whereby the amount of removed heat is dependent on the amount of air and on the temperature difference between the incoming and the outgoing air, and, further, on the amount of evaporated water. The temperature of the space to be air-conditioned as well as the relative humidity can be controlled by suitably adjusting the state and flow rate of the incoming air as well as the water flow.

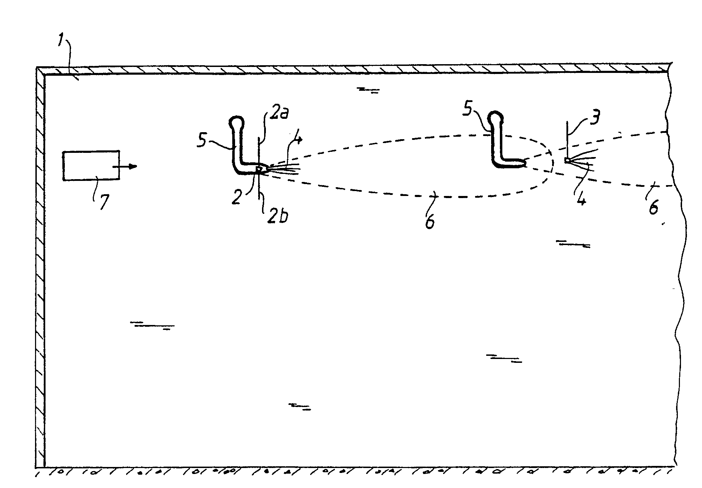

The invention will be described in the following with reference to the attached drawing, which schematically shows a section of a space to be air-conditioned, which space is provided with an air humidifying system according to one exemplary embodiment of the invention.

The reference numeral 1 of the drawing designates a space to be air-conditioned and the air of which is simultaneously humidified. The humidifying is effected by means of humidifier nozzles 2 and 3, of which the nozzle 2 can be an ejector operated by pressurized air and provided with pressure-air ducts 2a and water ducts 2b, and the nozzle 3 can be operated by water pressure. The action or jet range of the humidifier nozzles is designated by the reference numeral 4.

In the humidifying system according to the invention, an air jet is directed into the range of action of the humidifier nozzle, which air jet is, in the drawing, effected by means of an impulse air nozzle 5. There are several such air nozzles 5 provided in sequence in such a manner that a subsequent air nozzle is positioned within the jet range 6 of a preceding nozzle. The impulse jets 6 make it possible to convey humid air over a long distance to the desired objects.

The humidifier nozzle is preferably positioned inside the impulse air nozzle 5, as is illustrated in the case of the nozzle 2. However, it is also possible to position the humidifier nozzle in front of the air nozzle 5, as in the case of the humidifier nozzle 3, or above the air nozzle. The block 7 designates a device for incoming air, which, however, is not always necessary.

The humidifier nozzles need not be provided for each air nozzle, or some of the humidifier nozzles can be positioned separately without a controlling air jet. The air nozzles 5 with the humidifier nozzles thereof can be fitted in several rows and they can form conveying paths bending and/or branching in the horizontal and vertical directions as required in each particular case.

## Claims

1. A system for air humidifying by means of humidifier nozzles, especially for use in industrial halls and the like, said system comprising:
   an air nozzle (5) which produces an air jet (6) directed into the range of action of at least one humidifier nozzle (2, 3) in order to increase the amount of air for binding or capturing humidity and in order to convey the humidity in a desired direction;
   **characterized in that**
   there are a plurality of said air nozzles (5) mounted in a sequence such that each air nozzle (5) for which there is a preceding air nozzle in the sequence is positioned within the jet range (6) of said preceding air nozzle; and that at least one of said air nozzles (5) is an air impulse nozzle.

2. A system according to Claim 1, characterized in that an humidifier nozzle (2) is mounted inside the impulse air nozzle(s) (5).

3. A system according to Claim 1, characterized in that an humidifier nozzle (3) is mounted in front of the impulse air nozzle(s) (5).

4. A system according to Claim 1, characterized in that an humidifier nozzle is mounted above the impulse air nozzle(s).

## Revendications

1. Système d'humidification de l'air utilisant des tuyères d'humidificateur, à utiliser notamment dans des halls industriels et autres locaux similaires, ledit système comprenant :
   une tuyère à air (5) produisant un jet d'air (6) dirigé dans le rayon d'action d'au moins une tuyère d'humidificateur (2, 3) pour augmenter la quantité d'air destinée à fixer ou capter l'humidité et pour transporter l'humidité dans la direction désirée ;
   caractérisé en ce qu'un grand nombre desdites tuyères à air (5) sont montées en succession, de sorte que chaque tuyère à air (5) précédée par une tuyère à air dans cette succession est positionnée dans le rayon du jet (6) de ladite tuyère à air précédente ; et en ce qu'au moins une desdites tuyères à air (5) est une tuyère à air pulsé.

2. Système selon la revendication 1, caractérisé en ce qu'une tuyère d'humidificateur (2) est montée à l'intérieur de la (des) tuyère(s) à air pulsé (5).

3. Système selon la revendication 1, caractérisé en ce qu'une tuyère d'humidificateur (3) est montée devant la (les) tuyère(s) à air pulsé (5).

4. Système selon la revendication 1, caractérisé en ce qu'une tuyère d'humidificateur est montée au-dessus de la (des) tuyères(s) à air pulsé.

## Patentansprüche

1. System zum Luftbefeuchten mittels Befeuchtungsdüsen, insbesondere zur Verwendung in industriellen Hallen und dergleichen, wobei das System enthält:

   eine Luftdüse (5), die einen in den Betätigungsbereich wenigstens eine Befeuchtungsdüse (2, 3) gerichteten Luftstrahl (6) erzeugt, um die Luftmenge zum Binden oder Einschließen von Feuchtigkeit zu erhöhen, und um die Feuchtigkeit in eine gewünschte Richtung zu fördern,

   dadurch **gekennzeichnet**, daß eine Vielzahl von Luftdüsen (5) vorgesehen sind, die in einer Reihenfolge derart angeordnet sind, daß jede Luftdüse (5), für die eine vorhergehende Luftdüse in der Reihenfolge vorhanden ist, innerhalb des Strahlbereichs (6) der vorhergehenden Luftdüse angeordnet ist, und daß wenigstens eine der Luftdüsen (5) eine Luftstoßdüse ist.

2. System nach Anspruch 1,
   dadurch **gekennzeichnet**, daß eine Befeuchtungsdüse (2) innerhalb der Luftstoßdüse(n) (5) angebracht ist.

3. System nach Anspruch 1,
   dadurch **gekennzeichnet**, daß eine Befeuchtungsdüse (3) vor der (den) Luftstoßdüse(n) (5) angebracht ist.

4. System nach Anspruch 1,
   dadurch **gekennzeichnet,** daß eine Befeuchtungsdüse oberhalb der Luftstoßdüse(n) ange-
bracht ist.